# EUROPÄISCHE PATENTSCHRIFT

(11) **EP 3 587 645 B1**
(45) Veröffentlichungstag und Bekanntmachung des Hinweises auf die Patenterteilung: **13.05.2020**
(21) Anmeldenummer: 18180831.2
(22) Anmeldetag: 29.06.2018
(51) Int. Cl.: D04B 35/06

(54) **WIRKWERKZEUG UND VERFAHREN ZUR HERSTELLUNG EINES WIRKWERKZEUGS**
WARP KNITTING NEEDLE AND PROCESS FOR ITS MANUFACTURE
AIGUILLE POUR MACHINE À TRICOTER CHAÎNE ET PROCÉDÉ POUR SA FABRICATION

(43) Veröffentlichungstag der Anmeldung: 01.01.2020
(73) Patentinhaber: KARL MAYER R&D GmbH, 63179 Obertshausen (DE)
(72) Erfinder: Kaufhold, Steffen, 63796 Kahl am Main (DE); Schuler, Günter, 64850 Schaafheim (DE)
(74) Vertreter: Keil & Schaafhausen Patentanwälte PartGmbB

(56) Entgegenhaltungen:
- EP-A1- 1 813 703
- EP-A1- 1 988 199
- EP-A1- 2 048 271
- DE-A1- 4 414 703
- DE-B3-102006 004 099

## Beschreibung

Die vorliegende Erfindung betrifft ein Wirkwerkzeug für eine Kettenwirkmaschine, mit einem Schaft, der einen Befestigungsbereich aufweist, mit dem das Wirkwerkzeug in eine Aufnahmenut einer Barre einsetzbar ist, wobei der Befestigungsbereich eine Vorderseite, eine Rückseite und zwei Flanken zwischen der Vorderseite und der Rückseite aufweist.

Weiter betrifft die Erfindung ein Verfahren zur Herstellung eines solchen Wirkwerkzeugs aus einem Halbfabrikat.

Wirkwerkzeuge für Kettenwirkmaschinen sind beispielsweise Nadeln, insbesondere Arbeitsnadeln oder Wirknadeln, wie Schiebernadeln und Hakennadeln, Legenadeln oder Lochnadeln, sowie Polplatinen, Abschlagplatinen, Stechkammplatinen oder dergleichen.

Derartige Wirkwerkzeuge sind für Kettenwirkmaschinen bekannt. DE 10 2013 2015 708 B4 offenbart eine Vollkopfwirknadel mit einem Haken und einer Zunge. In einer Kettenwirkmaschine werden üblicherweise sehr viele Wirkwerkzeuge nebeneinander in eine Aufnahme einer Barre eingesetzt. Hierbei ist es für die Qualität der hergestellten Wirkware unter anderem wichtig, dass die Wirkwerkzeuge möglichst genau in der Aufnahme positioniert sind, da durch Fehlstellungen der Wirkwerkzeuge Fehlstellen in der Wirkware entstehen können.

Zur besseren Zentrierung einer Nadel in einer entsprechend angepassten Nut einer Nadelaufnahme ist aus der DE 10 2006 004 099 B3 eine Wirknadel für eine Kettenwirkmaschine bekannt, bei der ein Befestigungsabschnitt des Schafts im Bereich der Vorderseite oder der Rückseite eine größere Breite als im Bereich seiner gegenüberliegenden Seite aufweist.

Ein Verfahren zum Herstellen eines Wirkwerkzeugs ist auch aus EP 1 813 703 A1 bekannt. Das Wirkwerkzeug ist vorzugsweise ein dünnes Blechteil mit zwei zueinander parallelen Flachseiten und zwei Schmalseiten, wobei der Abstand zwischen den Flachseiten, d.h. die Dicke des Wirkwerkzeugs, beispielsweise lediglich 0,4 m beträgt.

DE 44 14 703 A1 beschreibt eine Wirknadel für eine Kettenwirkmaschine, deren Nadelschaft derart verformt ist, dass an mindestens zwei voneinander beabstandeten Stellen Erhebungen vorhanden sind, deren Höhenmaß zusammen mit der Schaftstärke ein Untermaß zur gegebenen Breite einer Nut einer entsprechenden Barre aufweist.

Wirkwerkzeuge sind bei Kettenwirkmaschinen Verschleißteile, die in gewissen Intervallen ersetzt werden müssen. Der Aufwand für einen Austausch hunderter Wirkwerkzeuge innerhalb einer Kettenwirkmaschine ist auch deshalb erheblich, weil die Wirkwerkzeuge in der Großserienfertigung nur mit entsprechend großen Fertigungstoleranzen hergestellt werden können, die teilweise ein manuelles Vermessen und Sortieren der Wirkwerkzeuge erfordert, bevor diese eingebaut werden können. Trotzdem lassen sich die Wirkwerkzeuge aufgrund der Fertigungstoleranzen nicht ausreichend präzise und wiederholbar in Kettenwirkmaschine einbauen.

Aufgabe der vorliegenden Erfindung ist es daher, ein verbessertes Wirkwerkzeug sowie ein Herstellungsverfahren hierfür anzugeben. Diese Aufgabe wird mit einem Wirkwerkzeug der eingangs genannten Art erfindungsgemäß dadurch gelöst, dass die Flanken parallel zueinander sind, wobei der Abstand der Flanken im Befestigungsbereich um maximal 5 µm, insbesondere um maximal 1 µm, variiert.

Der Erfindung liegt dabei der Gedanke zugrunde, dass ein Wirkwerkzeug mit geringem Aufwand besonders präzise in eine Kettenwirkmaschine eingesetzt werden kann, wenn die Flanken des Befestigungsbereichs möglichst ideal planparallel zueinander und hinsichtlich der Dicke möglichst ideal auf die Nutbreite der Aufnahme abgestimmt sind. Eine derart hohe Genauigkeit ist bei der aus Kostengründen erforderlichen Massenfertigung der Wirkwerkzeuge bisher nicht erreichbar. Die Erfindung schlägt daher vor, den für die Ausrichtung des Wirkwerkzeugs innerhalb der Kettenwirkmaschine erforderlichen Befestigungsbereich so nachzuarbeiten, dass eine ausreichend präzise Ausrichtung des Wirkwerkzeugs mit minimalem Aufwand möglich ist.

Grundsätzlich ist dieser Erfindungsgedanke auf unterschiedliche Arten von Wirkwerkzeugen anwendbar. So kann das Wirkwerkzeug eine Lochnadel sein, durch welche ein Faden geführt wird. Auch kann das Wirkwerkzeug eine Wirk- oder Arbeitsnadel sein, bei der auf einer Seite des Befestigungsbereichs ein Hakenbereich vorgesehen ist, wobei auf der gegenüberliegenden Seite des Befestigungsbereichs ein Fuß vorgesehen ist.

Nach einer Ausführungsform der Erfindung kann der Querschnitt des Schafts des Wirkwerkzeugs im Befestigungsbereich kleiner als der Querschnitt in den übrigen Bereichen des Schafts sein. Dieser reduzierte Querschnitt kann das Ergebnis der Nachbearbeitung des Befestigungsbereichs sein.

Vorteilhafterweise ist der Abstand der Flanken zueinander mittels eines Laser-Abtragverfahrens derart eingestellt, dass der Abstand der Flanken zueinander im Befestigungsbereich um maximal 5 µm, insbesondere um maximal 1 µm, variiert. Ein Laser-Abtragverfahren schafft neben der erforderlichen Maßgenauigkeit des Befestigungsbereichs auch eine für das präzise Einsetzen des Wirkwerkzeugs besonders geeignete Oberflächenstruktur im Befestigungsbereich, ohne dass weitere Oberflächenbearbeitungsschritte erforderlich sind. Alternativ oder zusätzlich können die Flanken auch mittels eines Ätzverfahrens und/oder mittels eines Schleifverfahrens bearbeitet werden.

Die oben genannte Aufgabe wird weiter durch ein Verfahren zur Herstellung eines Wirkwerkzeugs für Kettenwirkmaschinen aus einem Wirkwerkzeug-Halbfabrikat gelöst, wobei das Halbfabrikat einen Schaft mit einem Befestigungsbereich zum Einsetzen in eine Aufnahmenut einer Kettenwirkmaschinen-Barre aufweist und der Schaft einen ersten Oberflächenabschnitt, beispielsweise eine Flanke des Befestigungsbereichs des Wirkwerkzeugs, und einen dem ersten Oberflächenabschnitt gegenüberliegenden zweiten Oberflächenabschnitt, beispielsweise eine gegenüberliegende Flanke des Befestigungsbereichs des Wirkwerkzeugs, aufweist. Ein Wirkwerkzeug-Halbfabrikat ist dabei insbesondere ein zumindest im Befestigungsbereich noch nicht auf Endmaß bearbeitetes Wirkwerkzeug, das alle übrigen erforderlichen Merkmale bereits aufweisen kann, beispielsweise einen Haken, eine Zunge und/oder eine Schiebernut. Beispielsweise handelt es sich bei einem Halbfabrikat um eine herkömmliche in Massenfertigung hergestellte Nadel oder dergleichen für eine Kettenwirkmaschine. Nach dem erfindungsgemäßen Verfahren wird das Halbfabrikat einem Bearbeitungsschritt unterzogen, bei dem Material von dem ersten Oberflächenabschnitt und/oder dem zweiten Oberflächenabschnitt abgetragen wird, wobei der Bearbeitungsschritt so durchgeführt wird, dass der erste Oberflächenabschnitt und der zweite Oberflächenabschnitt nach dem Bearbeitungsschritt zwei zueinander parallele Ebenen bilden, die voneinander um eine vordefinierte Schaftdicke beabstandet sind. Erfindungsgemäß beträgt die Abweichung der Schaftdicke zwischen dem ersten Oberflächenabschnitt und dem zweiten Oberflächenabschnitt nach dem Bearbeitungsschritt maximal 5 µm, insbesondere maximal 1 µm.

Um eine besonders präzise Ausrichtung des Wirkwerkzeugs innerhalb der Kettenwirkmaschine zu ermöglichen, ist es nach einer besonders bevorzugten Ausführungsform des erfindungsgemäßen Verfahrens vor dem Schritt der Bearbeitung des Halbfabrikats vorgesehen, eine Aufnahmenut einer Textilmaschinen-Barre, in die das Wirkwerkzeug einsetzbar ist, zumindest hinsichtlich der Breite der Aufnahmenut zu vermessen, wobei die vordefinierte Schaftdicke im Wesentlichen gleich der gemessenen Breite der Aufnahmenut gewählt wird, um eine Presspassung zu erzeugen. Hierdurch ist es möglich, das Wirkwerkzeug individuell an die Kettenwirkmaschine anzupassen.

Eine Bearbeitung des Halbfabrikats mit der erfindungsgemäß erforderlichen Genauigkeit kann beispielsweise mittels eines Laser-Abtragverfahrens erfolgen. Alternativ oder zusätzlich hierzu ist es auch möglich, dass der Schritt der Bearbeitung des Halbfabrikats mittels eines Schleif- oder Ätzverfahrens erfolgt.

In Weiterbildung des Erfindungsgedankens wird ein Verfahren vorgeschlagen, das insbesondere die folgenden Schritte aufweist: Herstellen bzw. Bereitstellen einer Barre mit wenigstens einer Aufnahmenut, Vermessen zumindest der Breite der Aufnahmenut, und Bearbeiten des Halbfabrikats durch Materialabtrag auf wenigstens einer Flanke des Befestigungsbereichs bis die Flanken voneinander um maximal den Betrag der gemessenen Breite der Aufnahmenut beabstandet sind.

Die Erfindung wird im Folgenden anhand eines bevorzugten Ausführungsbeispiels in Verbindung mit der Zeichnung beschrieben. Hierin zeigen:
- Figur 1: in Perspektivansicht eine erste Ausgestaltung eines als Hakennadel ausgebildeten Wirkwerkzeugs und
- Figur 2: in Schnittansicht das Wirkwerkzeug nach Figur 1 in einem in eine Aufnahme eingesetzten Zustand.

In allen Figuren sind gleiche und einander entsprechende Elemente mit den gleichen Bezugszeichen versehen.

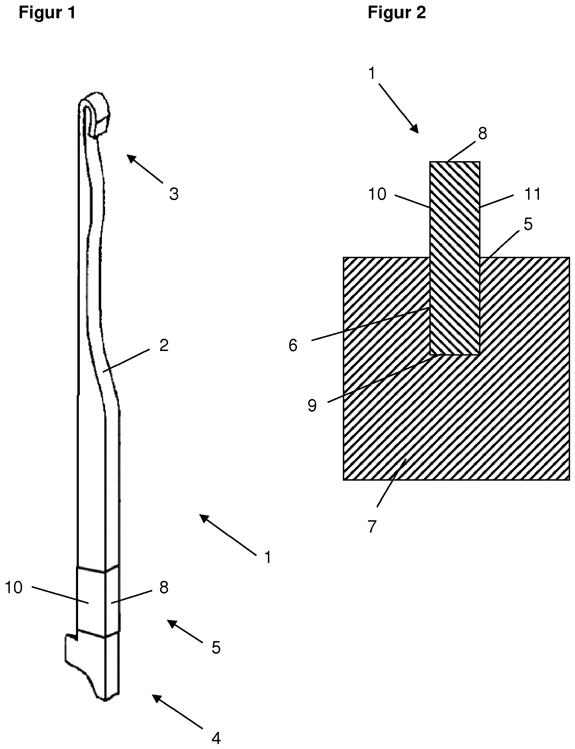

Das in den Figuren gezeigte Wirkwerkzeug 1 ist in dem dargestellten Ausführungsbeispiel als eine Hakennadel ausgebildet. Das Wirkwerkzeug 1 weist einen Schaft 2 auf, der eine Längsrichtung aufweist. Ferner weist das Wirkwerkzeug 1 an dem in Figur 1 oberen Ende einen Hakenbereich 3 mit einem Haken auf. Um bei einem Maschenbildungsvorgang den Haken durch eine zuvor gebildete Masche ziehen zu können, wird üblicherweise ein Schieber verwendet, der in einem in den Figuren nicht dargestellten Führungsbereich geführt ist. Auch der Schieber ist hier aus Gründen der Übersicht nicht dargestellt. Auf der dem Hakenbereich 3 gegenüberliegenden Seite (unten in Figur 1) ist das Wirkwerkzeug 1 mit einem Fuß 4 versehen.

Zwischen dem Hakenbereich 3 und dem Fuß 4 ist ein Befestigungsbereich 5 ausgebildet, der, wie in Figur 2 gezeigt, in eine Aufnahmenut 6 einer Barre 7 einsetzbar ist. In Kettenwirkmaschinen sind die Flanken der Aufnahmenut 6, d.h. die in Figur 2 linke bzw. rechte Innenwand der Nut, herstellungsbedingt weitgehend ideal planparallel zueinander.

Der Befestigungsbereich 5 des Wirkwerkzeugs 1 weist hierbei eine in Figur 2 obere Vorderseite 8, eine in Figur 2 untere Rückseite 9 sowie zwei einander gegenüberliegende Flanken 10, 11 auf, die sich zwischen der Vorderseite 8 und der Rückseite 9 erstrecken.

Um ein präzises Positionieren des Wirkwerkzeugs 1 mit seinem Befestigungsbereich 5 in der Aufnahmenut 6 zu ermöglichen, sind insbesondere die Flanken 10, 11 des Befestigungsbereichs 5 mit hoher Genauigkeit bearbeitet. In der dargestellten Ausführungsform ist die Aufnahmenut 6 in dem in Figur 2 gezeigten Querschnitt rechteckig. Daher sind auch die Flanken 10, 11 zueinander möglichst ideal planparallel angeordnet. Dies wird dadurch erreicht, dass zumindest der Befestigungsbereich 5 einer besonderen Bearbeitung unterzogen wird, insbesondere einem Laser-Abtragverfahren.

Wenn die Breite der Aufnahmenut nicht bekannt ist, wird zunächst die Aufnahmenut 6 zumindest hinsichtlich ihrer Breite vermessen. Anschließend wird ein Wirkwerkzeug-Halbfabrikat, beispielsweise die in Figur 1 gezeigte Nadel vor der Endbearbeitung, zumindest im Befestigungsbereich 5 durch Abtragen bearbeitet, bis die Flanken 10, 11 zueinander möglichst parallel sind und der Abstand der Flanken 10, 11 zueinander möglichst genau der ermittelten Breite der Aufnahmenut 6 entspricht.

Mittels eines Laser-Abtragverfahrens können die Flanken 10, 11 so genau bearbeitet werden, dass ihr Abstand voneinander im Befestigungsbereich 5 nicht mehr als 5 µm, insbesondere maximal 1 µm, variiert. Zudem ist es mit dem Laser-Abtragverfahren möglich, den Abstand der Flanken 10, 11 zueinander auf maximal 5 µm, insbesondere auf maximal 1 µm, genau auf die gemessene Breite der Aufnahmenut 6 einzustellen.

Der Einsatz eines Laser-Abtragverfahrens für die Bearbeitung des Befestigungsbereichs 5 des Wirkwerkzeugs 1 hat überdies den Vorteil, dass eine weitere Oberflächenbehandlung des Befestigungsbereichs 5 meist nicht erforderlich ist. Zudem kann das Laser-Abtragverfahren weitgehend automatisiert und mit kurzer Bearbeitungszeit für eine individuelle Anpassung des Flankenabstands für jedes Wirkwerkzeug 1 eingesetzt werden.

Alternativ zu der Bearbeitung nur des Befestigungsbereichs 5 des Wirkwerkzeugs 1 kann auch der gesamte Schaft 2 bearbeitet werden. Aus Effizienzgründen wird jedoch eine ausschließliche Bearbeitung des Befestigungsbereichs 5 bevorzugt. Dies kann dazu führen, dass der Befestigungsbereich 5 eine geringere Dicke als der übrige Schaft 2 aufweist. Ein hierbei gegebenenfalls entstehender Absatz zwischen dem Befestigungsbereich 5 und dem übrigen Schaft 2 kann zusätzlich zur Ausrichtung und Festlegung des Wirkwerkzeugs 1 in der Barre 7 oder dergleichen Halter dienen.

Insgesamt bewirkt die erfindungsgemäße Bearbeitung des Befestigungsbereichs 5 des Wirkwerkzeugs 1 eine erheblich präzisere Ausrichtung des Wirkwerkzeugs 1 in der Barre 7, wodurch die Qualität der mit der Kettenwirkmaschine hergestellten Wirkware weiter verbessert wird. Zudem sinkt der Aufwand beim Auswechseln von Wirkwerkzeugen durch die im Vergleich zu herkömmlichen Wirkwerkzeugen höhere Passgenauigkeit erheblich, weil der Aufwand zum Ausrichten klein gehalten werden kann. Es ist darüber hinaus auch möglich, den Bearbeitungsaufwand bei der Herstellung des Wirkwerkzeug-Halbfabrikats hinsichtlich der Genauigkeit der Ausbildung des Befestigungsbereichs 5 zu reduzieren, da erfindungsgemäß ohnehin eine Nachbearbeitung des Befestigungsbereichs 5 stattfindet. Dies kann die Herstellungskosten senken.

Die Bearbeitung des Befestigungsbereichs 5 erfolgt dabei vorzugsweise derart, dass das Wirkwerkzeug 1 im Befestigungsbereich 5 minimal kleiner als die Aufnahmenut 6 ist, um das Wirkwerkzeug 1 mit einer Presspassung in die Barre 7 einsetzen zu können.

## Patentansprüche

1. Wirkwerkzeug (1) für eine Kettenwirkmaschine mit einem Schaft (2), der einen Befestigungsbereich (5) aufweist, mit dem das Wirkwerkzeug (1) in eine Aufnahmenut (6) einer Barre (7) einsetzbar ist, wobei der Befestigungsbereich (5) eine Vorderseite (8), eine Rückseite (9) und zwei Flanken (10, 11) zwischen der Vorderseite (8) und der Rückseite (9) aufweist, **dadurch gekennzeichnet, dass** die Flanken (10, 11) parallel zueinander sind, wobei der Abstand der Flanken (10, 11) zueinander im Befestigungsbereich (5) um maximal 5 µm variiert.

2. Wirkwerkzeug nach Anspruch 1, **dadurch gekennzeichnet, dass** der Abstand der Flanken (10, 11) zueinander im Befestigungsbereich (5) um maximal 1 µm variiert.

3. Wirkwerkzeug nach Anspruch 1 oder 2, **dadurch gekennzeichnet, dass** auf einer Seite des Befestigungsbereichs (5) ein Hakenbereich (3) vorgesehen ist, und dass auf der gegenüberliegenden Seite des Befestigungsbereichs (5) ein Fuß (4) vorgesehen ist.

4. Wirkwerkzeug nach einem der Ansprüche 1 bis 3, **gekennzeichnet durch** einen Führungsbereich für einen Schieber.

5. Wirkwerkzeug nach einem der Ansprüche 1 bis 4, **dadurch gekennzeichnet, dass** der Querschnitt des Schafts (2) im Befestigungsbereich (5) kleiner als der Querschnitt in den übrigen Bereichen des Schafts (2) ist.

6. Verfahren zur Herstellung eines Wirkwerkzeugs (1) für Kettenwirkmaschinen aus einem Wirkwerkzeug-Halbfabrikat, das einen Schaft (2) mit einem Befestigungsbereich (5) zum Einsetzen in eine Aufnahmenut (6) einer Barre (7) aufweist, wobei der Schaft (2) einen ersten Oberflächenabschnitt (10) und einen dem ersten Oberflächenabschnitt (10) gegenüberliegenden zweiten Oberflächenabschnitt (11) aufweist, wobei das Wirkwerkzeug-Halbfabrikat einem Bearbeitungsschritt unterzogen wird, bei dem Material von dem ersten Oberflächenabschnitt (10) und/oder dem zweiten Oberflächenabschnitt (11) abgetragen wird, **dadurch gekennzeichnet, dass** der Bearbeitungsschritt so durchgeführt wird, dass der erste Oberflächenabschnitt (10) und der zweite Oberflächenabschnitt (11) nach dem Bearbeitungsschritt zwei zueinander parallele Ebenen bilden, die voneinander um eine vordefinierte Schaftdicke beabstandet sind, wobei die Abweichung der Schaftdicke zwischen dem ersten Oberflächenabschnitt (10) und dem zweiten Oberflächenabschnitt (11) nach dem Bearbeitungsschritt maximal 5 µm, insbesondere maximal 1 µm, beträgt.

7. Verfahren nach Anspruch 6, **dadurch gekennzeichnet, dass** der erste Oberflächenabschnitt (10) und der zweite Oberflächenabschnitt (11) einander gegenüberliegende Flanken (10, 11) eines Befestigungsbereichs (5) des Wirkwerkzeugs (1) bilden.

8. Verfahren nach Anspruch 6 oder 7, **dadurch gekennzeichnet, dass** vor dem Schritt der Bearbeitung des Wirkwerkzeug-Halbfabrikats eine Aufnahmenut (6) einer Barre (7), in die das Wirkwerkzeug (1) einsetzbar ist, zumindest hinsichtlich der Breite der Aufnahmenut (6) vermessen wird, wobei die vordefinierte Schaftdicke kleiner oder maximal gleich der gemessenen Breite der Aufnahmenut (6) gewählt wird.

9. Verfahren nach einem der Ansprüche 6 bis 8, **dadurch gekennzeichnet, dass** der Schritt der Bearbeitung des Wirkwerkzeug-Halbfabrikats mittels eines Laser-Abtragverfahrens erfolgt.

10. Verfahren nach einem der Ansprüche 6 bis 8, **dadurch gekennzeichnet, dass** der Schritt der Bearbeitung des Wirkwerkzeug-Halbfabrikats mittels eines Schleif- oder Ätzverfahrens erfolgt.

11. Verfahren nach einem der Ansprüche 6 bis 10, **dadurch gekennzeichnet, dass** das Wirkwerkzeug-Halbfabrikat als Wirknadel, insbesondere als Schiebernadel, mit einem Nadelkopf ausgebildet ist.

12. Verfahren nach einem der Ansprüche 6 bis 11 mit folgenden Schritten:
- Bereitstellen einer Barre (7) mit wenigstens einer Aufnahmenut (6),
- Vermessen zumindest der Breite der wenigstens einen Aufnahmenut (6), und
- Bearbeiten des Wirkwerkzeug-Halbfabrikats durch Materialabtrag auf wenigstens einer der Flanken (10,11) des Befestigungsbereichs (5) bis die Flanken (10,11) voneinander um maximal den Betrag der gemessenen Breite der Aufnahmenut (6) beabstandet sind.

## Claims

1. Knitting tool (1) for a warp knitting machine having a stem (2) which has an attachment region (5), by means of which the knitting tool (1) can be inserted into a receiving groove (6) of a bar (7), wherein the attachment region (5) has a front side (8), a rear side (9) and two flanks (10, 11) between the front side (8) and the rear side (9), **characterized in that** the flanks (10, 11) are parallel to one another,wherein the spacing of the flanks (10, 11) with respect to one another in the attachment region (5) varies by a maximum of 5 µm.

2. Knitting tool according to Claim 1, **characterized in that** the spacing of the flanks (10, 11) with respect to one another in the attachment region (5) varies by a maximum of 1 µm.

3. Knitting tool according to Claim 1 or 2, **characterized in that** a hook region (3) is provided on one side of the attachment region (5) and that a butt (4) is provided on the opposite side of the attachment region (5).

4. Knitting tool according to one of Claims 1 to 3, **characterized by** a guide region for a slider.

5. Knitting tool according to one of claims 1 to 4, **characterized in that** the cross-section of the stem (2) in the attachment region (5) is smaller than the cross-section in the other regions of the stem (2).

6. Method for producing a knitting tool (1) for warp knitting machines from a knitting tool semifinished product which comprises a stem (2) with an attachment region (5) for insertion in a receiving groove (6) of a bar (7), wherein the stem (2) has a first surface section (10) and a second surface section (11) opposite the first surface section (10), wherein knitting tool semifinished product is subjected to a processing step in which material is removed from the first surface section (10) and/or the second surface section (11), **characterized in that** the processing step is carried out so that after the processing step the first surface section (10) and the second surface section (11) form two planes which are parallel to one another and which are spaced apart from one another by a predefined stem thickness, wherein the deviation of the stem thickness between the first surface section (10) and the second surface section (11) after the processing step is a maximum of 5 µm, in particular a maximum of 1 µm.

7. Method according to one of claims 6, **characterized in that** the first surface section (10) and the second surface section (11) form mutually opposite flanks (10, 11) of an attachment region (5) of knitting tool (1).

8. Method according to claim 6 or 7, **characterized in that** before the step of processing knitting tool semifinished product, a receiving groove (6) of a bar (7) into which knitting tool (1) can be inserted, is measured at least with regard to the width of the receiving groove (6), wherein the predefined stem thickness is selected to be smaller than or at maximum equal to the measured width of the receiving groove (6).

9. Method according to one of claims 6 to 8, **characterized in that** the step of processing knitting tool semifinished product is carried out by means of a laser removal method.

10. Method according to one of claims 86to 8, **characterized in that** the step of processing knitting tool semifinished product is carried out by means of a grinding or etching process.

11. Method according to one of claims 6 to 10, **characterized in that** Knitting tool semifinished product is configured as a knitting needle, in particular as a slide needle with a needle head.

12. Method faccording to any of claims 6 to 11 comprising the following steps:
- providing a bar (7) with at least one receiving groove (6),
- measuring at least the width of the at least one receiving groove (6),and
- processing the knitting tool semifinished product by removal of material on at least one of the flanks (10, 11) of the attachment region (5) until the flanks (10, 11) are spaced apart from one another at maximum by the amount of the measured width of the receiving groove (6).

## Revendications

1. Aiguille (1) pour une machine à tricoter chaîne avec une tige (2), qui comporte une zone de fixation (5) avec laquelle l'aiguille (1) peut être introduite dans une rainure de réception (6) d'une platine (7), sachant que la zone de fixation (5) comporte une face avant (8), une face arrière (9) et deux flancs (10, 11) entre la face avant (8) et la face arrière (9), **caractérisée en ce que** les flancs (10, 11) sont parallèles l'un à l'autre, sachant que la distance des flancs (10, 11) varie l'un par rapport à l'autre au maximum de 5 µm dans la zone de fixation (5).

2. Aiguille selon la revendication 1, **caractérisée en ce que** la distance des flancs (10, 11) varie l'un par rapport à l'autre dans la zone de fixation (5) d'un maximum de 1 µm.

3. Aiguille selon la revendication 1 ou 2, **caractérisée en ce que** sur un côté de la zone de fixation (5), une zone de crochet (3) est prévue et **en ce que** sur le côté opposé de la zone de fixation (5), un talon (4) est prévu.

4. Aiguille selon l'une quelconque des revendications 1 à 3, **caractérisée par** une zone de guidage pour une coulisse.

5. Aiguille selon l'une quelconque des revendications 1 à 4, **caractérisée en ce que** la section de la tige (2) dans la zone de fixation (5) est plus petite que la section dans les zones restantes de la tige (2).

6. Procédé de fabrication d'une aiguille à tricoter (1) pour des machines à tricoter chaîne à partir d'un produit semi-fini d'aiguille, qui comporte une tige (2) avec une zone de fixation (5) pour introduction dans une rainure de réception (6) d'une platine (7), sachant que la tige (2) comporte une première section de surface (10) et une deuxième section de surface (11) opposée à la première section de surface (10), sachant que le produit semifini d'aiguille est soumis à une étape d'usinage lors de laquelle de la matière est enlevée de la première section de surface (10) et/ou de la deuxième section de surface (11), **caractérisé en ce que** l'étape d'usinage est exécutée de telle manière que la première section de surface (10) et la deuxième section de surface (11) forment après l'étape d'usinage deux plans parallèles l'un à l'autre, qui sont espacés l'un de l'autre d'une épaisseur de tige prédéfinie, sachant que l'écart de l'épaisseur de tige entre la première section de surface (10) et la deuxième section de surface (11) est au maximum de 5 µm, en particulier au maximum de 1 µm, après l'étape d'usinage.

7. Procédé selon la revendication 6, **caractérisé en ce que** la première section de surface (10) et la deuxième section de surface (11) forment des flancs (10, 11) opposés l'un à l'autre d'une zone de fixation (5) de l'aiguille (1).

8. Procédé selon la revendication 6 ou 7, **caractérisé en ce qu'**avant l'étape de l'usinage du produit semi-fini d'aiguille une rainure de réception (6) d'une platine (7) dans laquelle l'aiguille (1) peut être introduite, est mesurée au moins en ce qui concerne la largeur de la rainure de réception (6), sachant que l'épaisseur de tige prédéfinie est choisie plus petite ou au maximum identique à la largeur mesurée de la rainure de réception (6).

9. Procédé selon l'une quelconque des revendications 6 à 8, **caractérisé en ce que** l'étape d'usinage du produit semi-fini d'aiguille à tricoter a lieu au moyen d'un procédé d'enlèvement de matière au laser.

10. Procédé selon l'une quelconque des revendications 6 à 8, **caractérisé en ce que** l'étape d'usinage du produit semi-fini d'aiguille a lieu au moyen d'un procédé de rectification ou d'attaque caustique.

11. Procédé selon l'une quelconque des revendications 6 à 10, **caractérisé en ce que** le produit semi-fini d'aiguille à tricoter est constitué sous la forme d'une aiguille à tricoter, en particulier d'une aiguille à coulisse, avec une tête d'aiguille.

12. Procédé selon l'une quelconque des revendications 6 à 11 avec les étapes suivantes :
- préparation d'une platine (7) avec au moins une rainure de réception (6),
- mesure au moins de la largeur d'au moins une rainure de réception (6), et
- usinage du produit semi-fini d'aiguille par enlèvement de matière sur au moins un des flancs (10, 11) de la zone de fixation (5) jusqu'à ce que les flancs (10, 11) soient à distance l'un de l'autre au maximum du montant de la largeur mesurée de la rainure de réception (6).
